# EUROPÄISCHE PATENTSCHRIFT

(11) **EP 2 030 116 B1**
(45) Veröffentlichungstag und Bekanntmachung des Hinweises auf die Patenterteilung: **04.08.2010**
(21) Anmeldenummer: 07728763.9
(22) Anmeldetag: 03.05.2007
(51) Int. Cl.: G06F 13/38, H04L 12/46, H04L 12/56

(54) **KOMMUNIKATIONSBAUSTEIN**
COMMUNICATION COMPONENT
MODULE DE COMMUNICATION

(30) Priorität: 24.05.2006 DE 102006024889; 24.11.2006 DE 102006055513
(43) Veröffentlichungstag der Anmeldung: 04.03.2009
(73) Patentinhaber: Robert Bosch GmbH, 70442 Stuttgart (DE)
(72) Erfinder: IHLE, Markus, 72127 Jettenburg (DE); TAUBE, Jan, 72760 Reutlingen (DE); LORENZ, Tobias, 72766 Reutlingen (DE)
(86) Internationale Anmeldenummer: PCT/EP2007/054310
(87) Internationale Veröffentlichungsnummer: WO 2007/134955

(56) Entgegenhaltungen:
- EP-A- 1 251 432
- WO-A-2004/047385
- US-A1- 2005 138 246
- US-A1- 2006 041 705

## Beschreibung

Die Erfindung betrifft einen Kommunikationsbaustein zum Anschluss eines seriellen Busses, insbesondere einen Kommunikationsbaustein für ein Gateway, an das mehrere serielle Feldbusse angeschlossen sind.

Die Vernetzung von Steuergeräten, Sensorik und Aktuatorik mit Hilfe eines Netzwerkes bzw. Kommunikationssystems bestehend aus einer Kommunikationsverbindung, insbesondere einem Bus, und entsprechenden Kommunikationsbausteinen, hat in den letzten Jahren beim Bau von modernen Kraftfahrzeugen oder auch im Maschinenbau, insbesondere im Werkzeugmaschinenbereich als auch in der Automatisierung drastisch zugenommen. Synergieeffekte durch Verteilung von Funktionen auf mehrere Teilnehmer, insbesondere Steuergeräte, können dabei erzielt werden. Man spricht hierbei von verteilten Systemen. Solche verteilten Systeme oder Netzwerke bestehen somit aus den Teilnehmern und dem diese Teilnehmer verbindenden Bussystem oder mehreren verbindenden Bussystemen. Die Kommunikation zwischen verschiedenen Stationen bzw. Teilnehmern findet damit mehr und mehr über ein solches Kommunikationssystem, Bussystem oder Netzwerk statt, über welches die zu übertragenden Daten in Botschaften übermittelt werden. Dieser Kommunikationsverkehr auf dem Bussystem, Zugriffs- und Empfangsmechanismen sowie Fehlerbehandlung werden über ein entsprechendes Protokoll geregelt, wobei der Name des jeweiligen Protokolls häufig und so auch hier als Synonym für das Netzwerke bzw. das Bussystem selbst verwendet wird.

Als Protokoll beispielsweise im Kfz-Bereich hat sich der CAN-Bus (Controller Area Network) etabliert. Dieses ist ein ereignisgesteuertes Protokoll, d. h. Protokollaktivitäten wie das Senden einer Nachricht werden durch Ereignisse initiiert, die ihren Ursprung außerhalb des Kommunikationssystems haben. Der eindeutige Zugang zum Kommunikationssystem bzw. Bussystem wird über eine prioritätsbasierte Bitarbitrierung gelöst. Eine Vorraussetzung dafür ist, dass den zu übertragenden Daten und damit jeder Botschaft eine Priorität zugewiesen ist. Das CAN-Protokoll ist sehr flexibel; ein Hinzufügen weiterer Teilnehmer und Botschaften ist damit problemlos möglich, solange es noch freie Prioritäten (Message Identifier) gibt. Die Sammlung aller im Netzwerk zu sendenden Botschaften mit Prioritäten und deren sendenden bzw. empfangenden Teilnehmer bzw. den entsprechenden Kommunikationsbausteinen werden in einer Liste, der so genannten Kommunikationsmatrix, abgelegt.

Ein alternativer Ansatz zur ereignisgesteuerten, spontanen Kommunikation ist der rein zeitgesteuerte Ansatz. Alle Kommunikationsaktivitäten auf dem Bus sind strikt periodisch. Protokollaktivitäten wie das Senden einer Botschaft werden nur durch das Fortschreiben einer für das gesamte Bussystem gültigen Zeit ausgelöst. Der Zugang zu diesem Medium basiert auf der Zuteilung von Zeitbereichen, in denen ein Sender exklusives Senderecht hat. Dabei ist die Botschaftsreihenfolge in der Regel schon vor Inbetriebnahme festzusetzen. Es wird also ein Fahrplan erstellt, der den Anforderungen der Botschaften bezüglich Wiederholrate, Redundanz, Deadlines usw. genügt. Man spricht vom so genannten Bus-Schedule. Ein solches Bussystem ist beispielsweise der TTP/C.

Eine Verbindung der Vorteile beider genannter Busarten erfolgt im Lösungsansatz des zeitgesteuerten CAN, des so genannten TTCAN (Time Triggered Controller Area Network). Dieser genügt den oben skizzierten Forderungen nach zeitgesteuerter Kommunikation sowie den Forderungen nach einem gewissen Maß an Flexibilität. Der TTCAN erfüllt dies durch den Aufbau der Kommunikationsrunde in so genannten exklusiven Zeitfenstern für periodische Botschaften bestimmter Kommunikationsteilnehmer und in so genannte arbitrierende Zeitfenster für spontane Botschaften mehrerer Kommunikationsteilnehmer. TTCAN basiert dabei im Wesentlichen auf einer zeitgesteuerten, periodischen Kommunikation, die durch einen hauptzeitgebenden Teilnehmer bzw. Kommunikationsbaustein, den so genannten Zeitmaster mit Hilfe einer Zeitreferenznachricht getaktet wird.

Eine weitere Möglichkeit verschiedene Übertragungsarten zu verbinden bietet das FlexRay-Protokoll, wodurch ein schnelles, deterministisches und fehlertolerantes Bussystem insbesondere für den Einsatz in einem Kraftfahrzeug beschreiben wird. Dieses Protokoll arbeit nach dem Verfahren des Time-Division-Multiple-Access (TDMA), wobei den Teilnehmern bzw. den zu übertragenden Botschaften feste Zeitschlitze zugewiesen werden, in denen sie exklusiven Zugriff auf die Kommunikationsverbindung, den Bus haben. Die Zeitschlitze wiederholen sich dabei in einem festgelegten Zyklus, sodass der Zeitpunkt zu dem eine Botschaft über den Bus übertragen wird, exakt vorausgesagt werden kann und der Buszugriff deterministisch erfolgt. Um die Bandbreite für die Botschaftsübertragung auf dem Bussystem optimal zu nutzen, wird der Zyklus in einen statischen und einen dynamischen Teil unterteilt. Die festen Zeitschlitze befinden sich dabei im statischen Teil am Anfang eines Buszyklusses. Im dynamischen Teil werden die Zeitschlitze dynamisch vergeben. Darin wird nun der exklusive Buszugriff jeweils nur für eine kurze Zeit ermöglicht. Erfolgt kein Zugriff, wird der Zugriff für den nächsten Teilnehmer freigegeben. Diese Zeitspanne wird als Minislot bezeichnet, in der auf den Zugriff des ersten Teilnehmers gewartet wird.

Die Patentschrift US 2006/0041705 offenbart eine Arbitrierungseinheit zur Arbitrierung der Kommunikation zwischen verschiedenen Mikroprozessoren.

Wie soeben dargestellt gibt es eine Vielzahl unterschiedlicher Übertragungstechnologien und damit Arten von Bussystemen oder Netzwerken. Häufig ist es so, dass mehrere Bussysteme gleicher oder unterschiedlicher Art miteinander verbunden werden müssen. Dazu dient eine Busschnittstelleneinheit, ein so genanntes Gateway. Ein Gateway ist somit eine Schnittstelle zwischen verschiedenen Bussen, die von gleicher oder unterschiedlicher Art sein können, wobei das Gateway Botschaften von einem Bus auf einen oder mehrere andere Busse weiterleitet. Bekannte Gateways bestehen aus mehreren unabhängigen Kommunikationsbausteinen, wobei der Austausch von Botschaften dabei über die Prozessorschnittstelle (CPU-Interface) des jeweiligen Teilnehmers bzw. den entsprechenden Schnittstellenbaustein des jeweiligen Kommunikationsbausteins erfolgt. Dabei wird dieses CPU-Interface durch diesen Datenaustausch zusätzlich zu den zum Teilnehmer selbst zu übertragenden Botschaften stark belastet wodurch sich zusammen mit der sich daraus ergebenden Übertragungsstruktur eine relativ niedrige Datenübertragungsgeschwindigkeit ergibt. Weiterhin gibt es integrierte Kommunikationscontroller oder Kommunikationsbausteine, die sich einen gemeinsamen Botschaftsspeicher, das so genannte Nachrichtenspeicher bzw. Message-RAM, teilen um damit die Strukturnachteile zu kompensieren. Allerdings sind solche integrierten Kommunikationsbausteine dadurch bezüglich der Datenübertragung sehr unflexibel und insbesondere auf eine bestimmte Anzahl von Busanschlüssen und meist auch auf das gleiche Bussystem festgelegt.

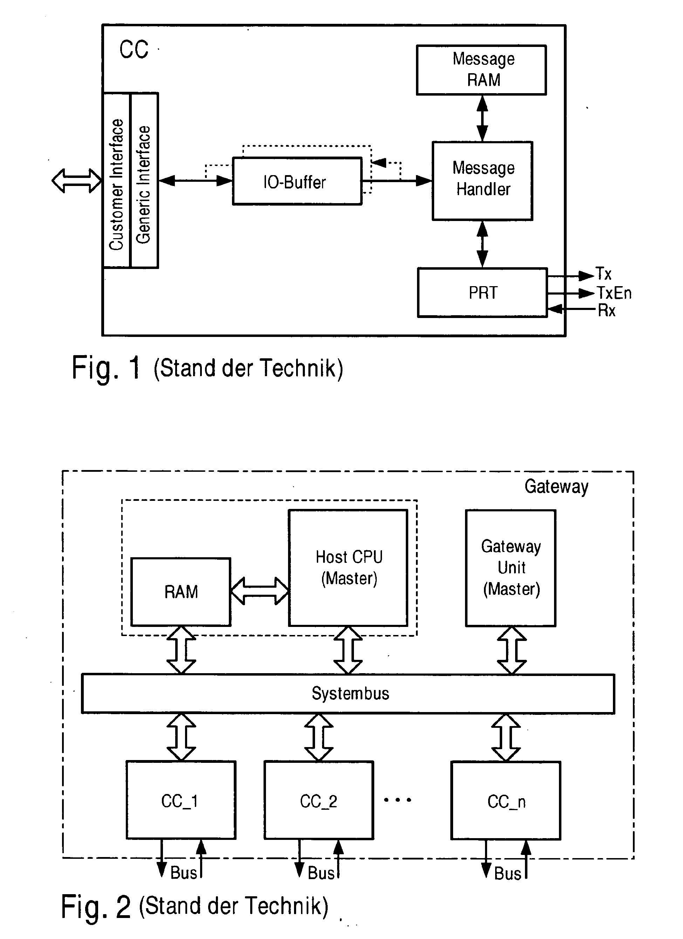

Figur 1 zeigt einen herkömmlichen Kommunikationsbaustein bzw. Kommunikationscontroller CC für ein herkömmliches Gateway, wie es in Figur 2 dargestellt ist. Der Kommunikationsbaustein CC weist ein Interface für einen internen Peripheriebus bzw. Systembus des Gateways und ein weiteres Interface für einen externen seriellen Bus auf. Der Systembus umfasst einen Adressbus, einen Datenbus und einen Steuerbus und dient zur internen Datenübertragung innerhalb des Gateways. An dem Systembus sind neben dem Kommunikationsbaustein eine Host-CPU mit einem Datenspeicher RAM sowie eine Gateway-Unit angeschlossen. Die Host-CPU dient zur internen Datenverarbeitung und die Gateway-Unit steuert den internen Datentransfer von einem Kommunikationsbaustein CC zu einem anderen Kommunikationsbaustein CC. Die Kommunikationsbausteine CC kommunizieren mit der Host-CPU und der Gateway-Unit nach dem Master-/Slave-Prinzip, wobei Kommunikationsbausteine Slave-Einheiten darstellen und die Host-CPU und die Gateway-Unit jeweils Master-Einheiten bilden.

Wie man aus Figur 1 erkennen kann, wird die interne Schnittstelle des Kommunikationsbausteins CC zu dem Systembus durch ein zweischichtiges Interface gebildet, nämlich durch ein Customer-Interface und ein generisches Interface. Das Customer-Interface verbindet den Systembus mit dem generischen Interface, wobei das Customer-Interface herstellerspezifisch und leicht austauschbar ist. Das generische Interface ist über das Customer-Interface an eine große Anzahl von kundenspezifischen Systembussen anschließbar. Der Kommunikationsbaustein CC nach dem Stand der Technik und wie er in Figur 1 dargestellt ist, enthält ferner Pufferspeicher zum Zwischenspeichern von zu transferierenden Daten. Die Pufferspeicher werden beispielsweise durch RAM- oder Datenregister gebildet. Der Kommunikationsbaustein CC enthält ferner eine Nachrichtenweiterleitungseinheit bzw. einen Message-Handler zur Weiterleitung zwischen Nachrichten von mindestens einem Nachrichtenspeicher und einer Kommunikationsprotokolleinheit. Der Nachrichtenspeicher bzw. das Message-RAM dient als Nachrichtenspeicher und speichert die zu transferierenden Nachrichtenobjekte sowie Konfigurations- und Statusinformationsdaten zwischen. Die Nachrichtenweiterleitungseinheit übernimmt die Steuerung des Datenflusses zwischen allen Pufferspeichern, der Kommunikationsprotokolleinheit und dem Nachrichtenzwischenspeicher. Die Kommunikationsprotokolleinheit (PRT) des in Figur 1 dargestellten herkömmlichen Kommunikationsbausteins CC implementiert die Kommunikation gemäß dem eingesetzten Datenübertragungsprotokoll. Dabei übernimmt die Kommunikationsprotokolleinheit PRT die Umwandlung bzw. Umsetzung zwischen dem Datenformat der über den externen seriellen Bus übertragenen Datenpakete DP und den innerhalb des Kommunikationsbausteins verwendeten Nachrichten bzw. Messages MSG. Die von der Nachrichtenweiterleitungseinheit bzw. dem Message-Handler weitergeleiteten Nachrichten MSG bestehen dabei zumindest aus einem Datenwort DW, wobei die Wortlänge bzw. die Bitzahl des Datenwortes DW beispielsweise der Busbreite des internen vorgesehenen Datenbusses des Gateways entspricht. Weist der Systembus beispielsweise einen 32 Bit breiten internen Datenbus auf, umfasst das Datenwort DW ebenfalls 32 Bit. Eine Nachricht bzw. Message MSG kann aus einer vorgegebenen Anzahl von Datenworten DW bestehen. Die Speicherkapazität eines Pufferspeichers entspricht beispielsweise dem Datenumfang einer Nachricht bzw. einer Message, die eine vorgegebene Anzahl von Datenworten DW umfasst. Die Arbitrierung des Datenflusses wird durch die Nachrichtenweiterleitungseinheit bzw. den Message-Handler vorgenommen.

Das herkömmliche Gateway, wie es in Figur 2 dargestellt ist, enthält mehrere Master-Einheiten, nämlich die Host-CPU und die Gateway-Unit. Da beide Master-Einheiten über den gleichen Systembus bzw. Peripheriebus und über eine gemeinsame Schnittstelle auf die Daten innerhalb eines Kommunikationsbausteins CC zugreifen, kann es zu einem Zugriffskonflikt kommen. Beispielsweise ist es möglich, dass verschiedene Master-Einheiten gleichzeitig auf die Daten eines Kommunikationsbausteins CC über dessen Systembus-Schnittstelle zugreifen möchten. In diesem Fall muss eine der Master-Einheiten mit dem Datenzugriff warten, bis die andere Master-Einheit ihren Datenzugriff abgeschlossen hat. Bei diesem Datenzugriff kann es sich um das Einschreiben, aber auch um das Auslesen von Daten aus dem Pufferspeicher des Kommunikationsbausteins CC handeln.

Es ist daher die Aufgabe der vorliegenden Erfindung, einen Kommunikationsbaustein für ein Gateway zu schaffen, der die Latenzzeit bei einem gleichzeitigen Datenzugriff verschiedener Master-Einheiten minimiert.

Diese Aufgabe wird erfindungsgemäß durch einen Kommunikationsbaustein mit den im Patentanspruch 1 angegebenen Merkmalen gelöst.

Die Erfindung schafft einen Kommunikationsbaustein zum Anschluss eines seriellen Busses, welcher Daten paketweise an mehrere andere Kommunikationsbausteine überträgt und an mehrere Systembusse eines Mehrprozessor-Gateways wortweise weiterleitet, wobei der Kommunikationsbaustein aufweist:
- eine an den seriellen Bus angeschlossene Kommunikations-Protokolleinheit zur Umsetzung zwischen Datenpaketen und Nachrichten, die jeweils aus mehreren Datenworten bestehen,
- eine Nachrichtenweiterleitungseinheit zur Weiterleitung von Nachrichten zwischen mindestens einem Nachrichtenspeicher und der Kommunikations-Protokolleinheit sowie Pufferspeichern,
- mehrere Interface-Einheiten, die jeweils an einen zugehörigen Systembus des Mehrprozessor-Gateways angeschlossen sind, wobei jede Interface-Einheit mit mindestens einem zugehörigen Pufferspeicher verbunden ist, der eine Nachricht zwischenspeichert,
- wobei eine Übertragung von Datenworten über die mehreren Systembusse des Mehrprozessor-Gateways und deren zugehörge Interface-Einheiten von und zu den Pufferspeichern der Interface-Einheiten zeitgleich ohne Wartezeit erfolgt.
- wobei jeder Systembus einen zugehörigen Systembus-Master aufweist.

Bei einer Ausführungsform des erfindungsgemäßen Kommunikationsbausteins ist der serielle Bus ein Feldbus.

Bei einer Ausführungsform des erfindungsgemäßen Kommunikationsbausteins wird der Feldbus durch einen CAN (Controller Area Network)-Bus gebildet.

Bei einer alternativen Ausführungsform des erfindungsgemäßen Kommunikationsbausteins handelt es sich bei dem Feldbus um einen FlexRay-Bus.

Bei einer weiteren Ausführungsform des erfindungsgemäßen Kommunikationsbausteins ist der Feldbus ein MOST-Bus.

Bei einer weiteren alternativen Ausführungsform des erfindungsgemäßen Kommunikationsbausteins wird der serielle Bus durch einen Ethernet-Bus gebildet.

Bei einer Ausführungsform des erfindungsgemäßen Kommunikationsbausteins signalisiert die Nachrichtenweiterleitungseinheit den Empfang einer über einen Systembus wortweise zu übertragenden Nachricht an den Systembus-Master des Systembusses.

Bei einer alternativen Ausführungsform des erfindungsgemäßen Kommunikationsbausteins bestätigt die Nachrichtenweiterleitungseinheit dem System-Master den Erhalt einer zu übertragenden Nachricht durch Signale, nachdem dieser die Information angefragt hat.

Bei einer weiteren Ausführungsform des erfindungsgemäßen Kommunikationsbausteins weist eine von dem Systembus empfangene Nachricht, welche in einem Pufferspeicher zwischengespeichert ist und von der Nachrichtenweiterleitungseinheit an den Nachrichtenspeicher weitergeleitet wird, zur Signalisierung einer Sendebereitschaft über den seriellen Bus mindestens ein Flagbit auf.

Die Erfindung schafft ferner ein Verfahren zur bidirektionalen Übertragung von Daten zwischen einem seriellen Bus, der Daten paketweise überträgt, und mehreren Systembussen eines Mehrprozessor-Gateways, wobei jeder Systembus einen zugehörigen Systembus-Master aufweist, wobei die Systembusse die Daten wortweise übertragen, mit den folgenden Schritten:
- Umsetzen von Datenpaketen, die über den seriellen Bus übertragen werden, in Nachrichten, die mehrere Datenworte aufweisen,
- Zwischenspeichern der Nachrichten in Pufferspeichern, und
- Übertragen von Datenworten über mehrere Systembusse von und zu den Pufferspeichern zeitgleich ohne Wartezeit.

Im Weiteren werden bevorzugte Ausführungsformen des erfindungsgemäßen Kommunikationsbausteins und des erfindungsgemäßen Verfahrens zur bidirektionalen Datenübertragung unter Bezugnahme auf die beigefügten Figuren zur Erläuterung erfindungswesentlicher Merkmale näher beschrieben.

Es zeigen:
- Figur 1:: einen Kommunikationsbaustein nach dem Stand der Technik;
- Figur 2:: ein Gateway nach dem Stand der Technik;
- Figur 3:: ein Mehrprozessor-Gateway, welches erfindungsgemäße Kommunikations- bausteine enthält;
- Figur 4:: ein Blockdiagramm einer möglichen Ausführungsform des erfindungsgemä- ßen Kommunikationsbausteins;
- Figur 5:: eine schaltungstechnische Erweiterung eines herkömmlichen Kommunikati- onsbausteins, um eine Kompatibilität mit dem erfindungsgemäßen Kommuni- kationsbaustein herzustellen.

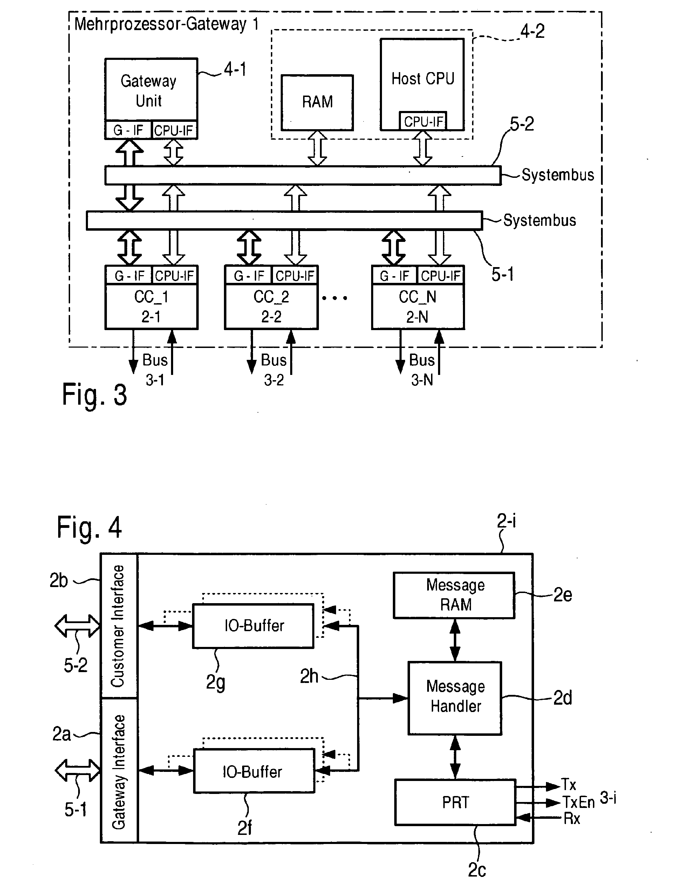

Wie man aus Figur 3 erkennen kann, weist ein Mehrprozessor-Gateway 1 mehrere Kommunikationsbausteine 2-i gemäß der Erfindung auf, die jeweils an einen seriellen Bus 3-i anschließbar sind. Bei den seriellen Bussen 3-i handelt es sich beispielsweise um einen Feldbus oder um einen Ethernet-Bus. Über die seriellen Busse 3-i werden die Daten paketweise übertragen. Die übertragenen Datenpakete DP umfassen Verwaltungs- bzw. Header-Daten und Nutzdaten bzw. Payload-Daten. Das Mehrprozessor-Gateway 1 weist mehrere Master-Einheiten bzw. Prozessoren 4-1, 4-2 auf. Diese Master-Einheiten können verschiedene Funktionen übernehmen. Bei dem in Figur 3 dargestellten Beispiel besteht eine erste Master-Einheit aus einer Gateway-Unit 4-1, die den Datentransfer zwischen verschiedenen Kommunikationsbausteinen 2-i gemäß der Erfindung steuert. Ein weiterer Prozessor 4-2 ist eine Host-CPU zur Datenverarbeitung der intern übertragenen Datenworte DW. Darüber hinaus weist das Mehrprozessor-Gateway 1 mehrere Systembusse 5-1, 5-2 auf. Vorzugsweise hat jede Master-Einheit 4-1, 4-2 einen eigenen Systembus. Jeder Systembus weist einen eigenen Daten-, Adress- und Steuerbus auf. Innerhalb des Mehrprozessor-Gateways 1 werden die Daten wortweise übertragen, wobei die Länge des Datenwortes der Busbreite des jeweiligen Datenbusses entspricht. Die Kommunikationsbausteine 2-i gemäß der Erfindung weisen bei einer bevorzugten Ausführungsform für jeden Systembus 5-i ein zugehöriges Interface auf.

Figur 4 zeigt eine mögliche Ausführungsform des erfindungsgemäßen Kommunikationsbausteins 2-i. Der Kommunikationsbaustein 2 dient zum Anschluss eines seriellen Busses 3 über ein Interface, wobei der Kommunikationsbaustein 2-i für jeden internen Systembus 5-i des Mehrprozessor-Gateways 1 ein weiteres getrenntes Interface 2a, 2b aufweist. Bei der in Figur 4 dargestellten Ausführungsform weist der Kommunikationsbaustein 2-i ein erstes Interface 2a zum Anschluss an den Systembus 5-1 auf, dessen Master-Einheit durch die Gateway-Unit 4-1 gebildet wird. Darüber hinaus weist der Kommunikationsbaustein 2-i ein weiteres Interface 2b zum Anschluss an den Systembus 5-2 des Mehrprozessor-Gateways 1 auf, dessen Bus-Master durch die Host-CPU des Prozessors 4-2 gebildet wird. An den externen seriellen Datenbus 3-i ist eine Kommunikationsprotokolleinheit 2c des Kommunikationsbausteins angeschlossen. Die Kommunikationsprotokolleinheit 2c führt eine Umsetzung zwischen Datenpaketen DP, welche extern über den seriellen Datenbus 3-i übertragen werden, und internen Nachrichten bzw. Messages MSG durch, die jeweils aus einem oder mehreren Datenworten DW bestehen.

Der Kommunikationsbaustein 2 enthält ferner eine Nachrichtenweiterleitungseinheit bzw. einen Message-Handler 2d zur Weiterleitung von Nachrichten zwischen mindestens einem internen Nachrichtenspeicher bzw. Message-RAM 2e und der Kommunikationsprotokolleinheit 2c sowie verschiedenen Pufferspeichern 2f, 2g über interne Datenleitungen 2a. Die Speicherkapazität eines Pufferspeichers 2f, 2g entspricht beispielsweise dem Datenumfang einer zu übertragenden Nachricht, d. h. einer vorgegebenen Anzahl von Datenworten DW.

Der Kommunikationsbaustein 2-i weist mehrere Interface-Einheiten 2a, 2b auf, die jeweils an einem zugehörigen Systembus 5-i des Gateways 1 angeschlossen sind. Dabei ist jede Interface- Einheit 2a, 2b mit mindestens einem zugehörigen Pufferspeicher 2f, 2g verbunden, in der mindestens eine Nachricht bzw. Message zwischenspeicherbar ist.

Die Übertragung von Datenworten DW über die verschiedenen Systembusse 5-1, 5-2 und deren zugehörigen Interface-Einheiten 2a, 2b von und zu den Pufferspeichern 2f, 2g der Interface-Einheiten erfolgt in einem Kommunikationsbaustein 2-i zeitgleich ohne Wartezeit.

Die Arbitrierung des Datentransfers, d. h. die Arbitrierung des Datentransfers zu den Pufferspeichern 2f, 2g und dem Nachrichtenzwischenspeicher 2e bzw. Message-RAM erfolgt durch die Nachrichtenweiterleitungseinheit 2d. In dem Message-RAM 2e sind beispielsweise 128 Nachrichten MSG ablegbar. Die Nachrichtenweiterleitungseinheit 2d signalisiert bei einer Ausführungsform des Kommunikationsbausteins 2 den Empfang eines über einen Systembus 5-i wortweise übertragenen Nachricht MSG an den Systembus-Master 4-i des Systembusses. Bei einer alternativen Ausführungsform bestätigt die Nachrichtenweiterleitungseinheit 2d dem Systembus-Master 4-i den Erhalt einer zu übertragenden Nachricht durch Signale, nachdem dieser die Information angefragt hat. Zum Einschreiben von Daten durch einen Bus-Master 4-i über den Datenbus eines Systembusses 5-i sowie über das zugehörige Interface in einen Pufferspeicher des Kommunikationsbausteins 2 erfolgt relativ schnell, d. h. der Bus-Master 4-i muss nicht auf den Datenzugriff warten. Wie man aus Figur 4 erkennen kann, erfolgt die Arbitrierung des erfindungsgemäßen Kommunikationsbausteins 2-i nicht auf der zeitkritischen Systemseite, d. h. auf der Seite der Systembusse 5, sondern auf der weniger zeitkritischen Peripherieseite, d. h. auf der Seite der externen seriellen Datenbusse 3 durch die Nachrichtenweiterleitungseinheit 2d. Im Vergleich zu herkömmlichen Kommunikationsbausteinen wird somit bei dem erfindungsgemäßen Kommunikationsbaustein 2 die Wartezeit gewissermaßen von der Systemseite auf die Peripherieseite verlagert. Bei der in Figur 4 dargestellten Ausführungsform wird neben dem hersteller- und applikationsspezifischen Interface 2b ein Gateway-Interface 2a implementiert. Dieses Interface 2a bietet eine Zugriffsmöglichkeit auf ein Nachrichtendatenobjekt bzw. Message-Object für eine Gateway-Unit 4-1, die parallel zu der Host-CPU des Prozessors 4-2 arbeitet. Die Gateway-Unit 4-1 wird beispielsweise durch einen Co-Prozessor gebildet. Die Gateway-Unit 4-1 hat Zugriff auf alle Funktionen/Register und Nachrichtenobjekte bzw. Message-Objects, die für die Gateway-Funktion bzw. den Datentransfer zwischen Kommunikationsbausteinen erforderlich sind. Die Arbitrierung des Datenverkehrs zwischen der CPU und der Gateway-Unit 4-1 wird durch den Message-Handler bzw. die Nachrichtenweiterleitungseinheit 2d des Kommunikationsbausteins 2 durchgeführt.

Bei einer Ausführungsform des erfindungsgemäßen Kommunikationsbausteins weist eine von dem Systembus 5 empfangene Nachricht, welche in einem Pufferspeicher zwischengespeichert und welche von der Nachrichtenweiterleitungseinheit 2d an den Nachrichtenspeicher 2e weitergeleitet wird, zur Signalisierung einer Sendebereitschaft über den seriellen Bus 3 mindestens ein Flag-Bit auf.

Bei Empfang eines Nachrichtendatenpakets DP von dem seriellen Feldbus 3 durch das Mehrprozessor-Gateway 1 werden die folgenden Schritte durchgeführt.

Zunächst wird das Datenpaket DP durch die Kommunikationsprotokolleinheit 2c empfangen und redundante Daten, die der Übertragungssicherheit dienen, durch die Kommunikationsprotokolleinheit 2c entfernt. Die verbleibenden Daten bilden eine Nachricht bzw. eine Message MSG. Die Kommunikationsprotokolleinheit 2c signalisiert der Nachrichtenweiterleitungseinheit 2d den Empfang einer Nachricht. Die Nachrichtenweiterleitungseinheit 2d bzw. der Message-Handler 2d führt eine Arbitrierung des gewünschten Datentransferwunsches durch. Hierzu werden auch weitere Anfragen für weitere Datentransfers seitens des Message-Handlers 2d angefragt. Bei einer möglichen Ausführungsform wird entsprechend einer vorgegebenen Priorisierung durch den Message-Handler 2d eine Entscheidung herbeigeführt, welcher Datentransfer als nächstes durchgeführt wird. Anschließend erfolgt ein datenwortweiser oder kompletter Transfer der gesamten Nachricht bzw. Message MSG aus der Kommunikationsprotokolleinheit 2c in das Message-RAM 2e. Weiterhin signalisiert der Message-Handler bzw. die Nachrichtenweiterleitungseinheit 2d der Master-Einheit bzw. der CPU beispielsweise über ein internes Interrupt-Signal den Empfang einer Nachricht bzw. Message. In einem weiteren Schritt fordert die Master-Einheit bzw. die CPU die empfangene Nachricht bzw. Message mit einer Anforderungsnachricht bzw. einem Request an. Der Message-Handler 2d überprüft die Anforderung der CPU und arbitriert den Datentransfer. Anschließend wird die Nachricht datenwortweise vollständig von dem Message-RAM 2e zu dem Interface-Register bzw. dem Pufferspeicher 2f, 2g der anfragenden Master-Einheit 4 transferiert. Wird die Nachricht beispielsweise von der Gateway-Unit 4-1 als Master-Einheit des Systembusses 5-1 angefragt, erfolgt ein Datentransfer aus dem Message-RAM 2e in den Pufferspeicher 2f des Gateway-Interfaces 2a. Erfolgt die Anfragenachricht durch die Host-CPU des Prozessors 4-2 als Master-Einheit des Systembusses 5-2, wird die Nachricht von dem Message-RAM 2e durch die Nachrichtenweiterleitung 2d in den Pufferspeicher 2g des Customer-Interfaces 2b transferiert. Nach Beendigung des internen Datentransfers in den Pufferspeicher wird anschließend die Nachricht bzw. Message durch die Master-Einheit 4 des daran angeschlossenen Systembusses 5 wortweise über den Datenbus des jeweiligen Systembusses 5 ausgelesen.

Im Weiteren wird das Senden einer aus mehreren Datenworten DW bestehenden Nachricht bzw. Message MSG von einer Master-Einheit 4 zu einem seriellen Bus 3-i beschrieben.

Die Master-Einheit 4, beispielsweise die Host-CPU des Prozessors 4-2 schreibt wortweise die Daten über den Datenbus des jeweiligen Systembusses 5-i und das entsprechende Interface in den Pufferspeicher des Kommunikationsbausteins 2 ein. Weiterhin wird der Nachrichtenweiterleitungseinheit 3d signalisiert, dass ein Auftrag zum Schreiben einer Nachricht in das Message-RAM 2e besteht. Diese Signalisierung kann beispielsweise durch das Setzen von Flags erfolgen. Anschließend erfolgt die Arbitrierung des internen Datentransfers durch den Message-Handler 2d, wobei kontrolliert wird, ob weitere Anfragen für einen weiteren Datentransfer zur selben Zeit bestehen. Sobald der Datentransfer erfolgen kann, ist die in dem Pufferspeicher zwischengespeicherte Nachricht wortweise oder vollständig von dem internen Interface-Register bzw. Pufferspeicher zu dem Nachrichtenspeicher bzw. dem Message-RAM transferiert. Eine in dem Message-RAM 2e abgespeicherte Nachricht bzw. Message wird entsprechend für den Message-Handler 2d gekennzeichnet, beispielsweise durch Setzen eines entsprechenden Anzeigeflags. In einem weiteren Schritt wird die an den externen seriellen Bus zu übertragende Nachricht an den Message-Handler 2d zu der Kommunikationsprotokolleinheit 2c wortweise oder vollständig in einem Schritt transferiert. Die Kommunikationsprotokolleinheit 2c führt eine Umsetzung in das Datenformat des extern verwendeten Datenübertragungsprotokolls um. Die Daten werden zu Datenpaketen DP verpackt, die einerseits Header- bzw. Verwaltungsdaten und andererseits Nutz- bzw. Payload-Daten entfalten. Weiterhin fügt die Kommunikationsprotokolleinheit 2c redundante Daten als Übertragungsschutz hinzu. In einem weiteren Schritt werden die so gebildeten Datenpakete DP von der Kommunikationsprotokolleinheit 2c über den seriellen externen Datenbus 3 versendet. An dem externen seriellen Datenbus 3 sind beispielsweise Aktoren oder Sensoren angeschlossen. Bei dem externen seriellen Datenbus 3 kann es sich beispielsweise um einen CAN (Controller Area Network)-Bus, einen FlexRay-Bus, einen MOST-Bus oder um einen LIN-Bus handeln. Bei einer alternativen Ausführungsform wird der serielle Bus 3 durch einen Ethernet-Bus gebildet.

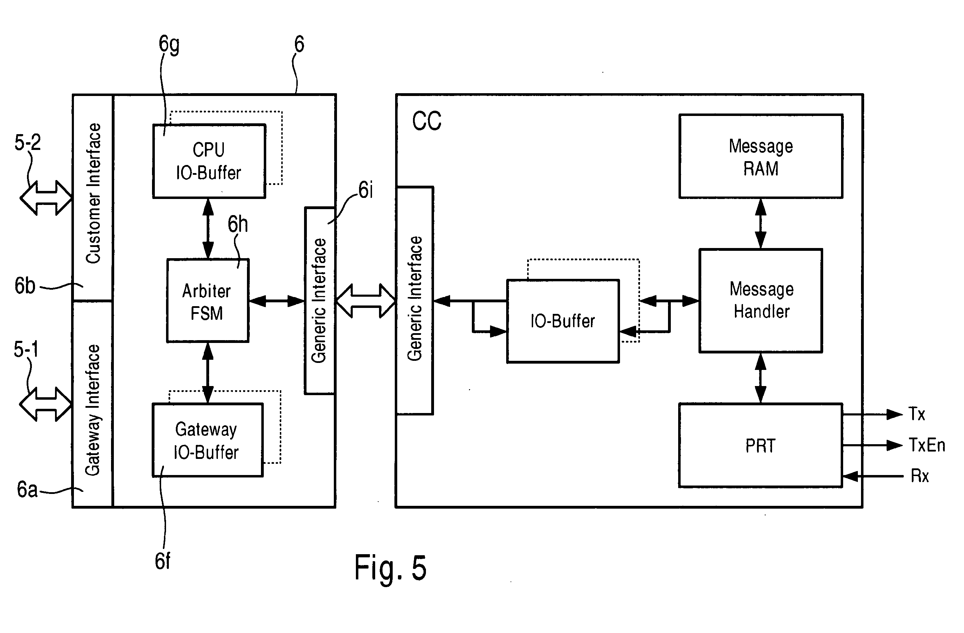

Figur 5 zeigt eine Weiterleitungsschaltung bzw. Adapterschaltung 6, welche es erlaubt, einen herkömmlichen Kommunikationsbaustein CC gemäß Figur 1 in ein Mehrprozessor-Gateway 1 gemäß der Erfindung, wie es in Figur 3 dargestellt ist, anzuschließen. Die Adapterschaltung enthält ein Gateway-Interface 6a und ein Customer-Interface 6b. Die beiden Interfaces 6a, 6b weisen jeweils einen zugehörigen Pufferspeicher 6f, 6g auf. Die Arbitrierung des Datentransfers erfolgt durch eine Arbiter-FSM (Finite State Machine) 6h, welche die entsprechende Priorisierung zur Datenübertragung vornimmt. Die Adapterschaltung 6 enthält ferner ein generisches Interface 6i entsprechend dem generischen Interface des herkömmlichen Kommunikationsbausteins CC nach dem Stand der Technik, wie er in Figur 1 dargestellt ist.

Die Adapterschaltung 6 ermöglicht den kompatiblen Einsatz der erfindungsgemäßen Kommunikationsbausteine 2, wie er in Figur 4 dargestellt ist, mit herkömmlichen Kommunikationsbausteinen CC nach dem Stand der Technik, wie er in Figur 1 dargestellt ist.

Der erfindungsgemäße Kommunikationsbaustein 2 erlaubt den gleichzeitigen Datenzugriff von zwei steuernden Modulen bzw. Master-Einheiten 4 auf Daten, die in einem separaten Pufferspeicher des Kommunikationsbausteins 2 abgespeichert bzw. zwischengespeichert sind. Bei einem gleichzeitigen Datenzugriff ist somit die Bandbreite der Datenübertragung des erfindungsgemäßen Kommunikationsbausteins 2 erhöht. Es entstehen keine Wartezyklen bei Datenzugriffen aufgrund der durch die Nachrichtenweiterleitungseinheit 2d erfolgten Arbitrierung.

## Patentansprüche

1. Kommunikationsbaustein zum Anschluss eines seriellen Busses (3), welcher Daten paketweise überträgt, an mehrere Systembusse (5) eines Mehrprozessor-Gateways (1), die Daten wortweise übertragen,
wobei der Kommunikationsbaustein (2) aufweist:
(a) eine an den seriellen Bus (3) angeschlossene Kommunikations-Protokolleinheit (2c) zur Umsetzung zwischen Datenpaketen (DP) und Nachrichten (MSG), die jeweils aus mehreren Datenworten (DW) bestehen;
(b) eine Nachrichtenweiterleitungseinheit (2d) zur Weiterleitung von Nachrichten (MSG) zwischen mindestens einem Nachrichtenspeicher (2e) und der Kommunikations-Protokolleinheit (2c) sowie Pufferspeichern (2f, 2g);
(c) mehrere Interface-Einheiten (2a, 2b), die jeweils an einen zugehörigen Systembus (5-1, 5-2) des Mehrprozessor-Gateways (1) angeschlossen sind,
wobei jede Interface-Einheit (2a, 2b) mit mindestens einem zugehörigen Pufferspeicher (2f, 2g) verbunden ist, der eine Nachricht (MSG) zwischenspeichert;
(d) wobei eine Übertragung von Datenworten (DW) über die mehreren Systembusse (5-1, 5-2) des Mehrprozessor-Gateways (1) und deren zugehörige Interface-Einheiten (2a, 2b) von und zu den Pufferspeichern (2f, 2g) der Interface-Einheiten (2a, 2b) zeitgleich ohne Wartezeit erfolgt;
(e) wobei jeder Systembus (5-1, 5-2) einen zugehörigen Svstembus-Master (4-1, 4-2) aufweist.

2. Kommunikationsbaustein nach Anspruch 1,
wobei der serielle Bus (3) ein Feldbus ist.

3. Kommunikationsbaustein nach Anspruch 2,
wobei der Feldbus ein CAN (Controller Area Network)-Bus ist.

4. Kommunikationsbaustein nach Anspruch 2,
wobei der Feldbus ein FlexRay-Bus ist.

5. Kommunikationsbaustein nach Anspruch 2,
wobei der Feldbus ein MOST-Bus ist.

6. Kommunikationsbaustein nach Anspruch 2,
wobei der Feldbus ein LIN-Bus ist.

7. Kommunikationsbaustein nach Anspruch 1,
wobei der serielle Bus (3) ein Ethernet-Bus ist.

8. Kommunikationsbaustein nach Anspruch 1,
wobei die Nachrichtenweiterleitungseinheit (2d) den Empfang einer über einen Systembus (5-1, 5-2) wortweise übertragenen Nachricht (MSG) an den Systembus-Master (4-1, 4-2) des Systembusses signalisiert.

9. Kommunikationsbaustein nach Anspruch 8,
wobei die Nachrichtenweiterleitungseinheit dem Systembus-Master (4-1, 4-2) den Erhalt einer zu übertragenden Nachricht (MSG) durch Signale bestätigt, nachdem dieser die Information angefragt hat.

10. Kommunikationsbaustein nach Anspruch 1,
wobei eine von dem Systembus (5-1, 5-2) empfangene Nachricht, welche in einem Pufferspeicher (2f, 2g) zwischengespeichert und von der Nachrichtenweiterleitungseinheit (2d) an den Nachrichtenspeicher (2e) weitergeleitet wird, zur Signalisierung einer Sendebereitschaft über den seriellen Bus (3) mindestens ein Flag-Bit aufweist.

11. Verfahren zur bidirektionalen Übertragung von Daten zwischen einem seriellen Bus, welcher Daten paketweise überträgt, und mehreren Systembussen eines Mehrprozessor-Gateways, wobei jeder Systembus (5-1, 5-2) einen zugehörigen Systembus-Master (4-1, 4-2) aufweist, wobei die Systembusse die Daten wortweise übertragen, mit den folgenden Schritten:
(a) Umsetzen von Datenpaketen (DP), die über den seriellen Bus (3) übertragen werden, in Nachrichten, die mehrere Datenworte (DW) aufweisen;
(b) Zwischenspeichern der Nachrichten in Pufferspeichern (2f, 2g); und
(c) Übertragen von Datenworten (DW) über die mehreren Systembusse (5-1, 5-2) von und zu den Pufferspeichern (2f, 2g) zeitgleich ohne Wartezeit.

## Claims

1. Communication chip for connecting a serial bus (3), which transmits data in packets, to a plurality of system buses (5) on a multiprocessor gateway (1) which transmit data in words,
wherein the communication chip (2) has:
(a) a communication protocol unit (2c), connected to the serial bus (3), for converting between data packets (DP) and messages (MSG), which respectively comprise a plurality of data words (DW);
(b) a message forwarding unit (2d) for forwarding messages (MSG) between at least one message memory (2e) and the communication protocol unit (2c) and also buffer stores (2f, 2g);
(c) a plurality of interface units (2a, 2b) which are respectively connected to an associated system bus (5-1, 5-2) on a multiprocessor gateway (1),
wherein each interface unit (2a, 2b) is connected to at least one associated buffer store (2f, 2g) which buffer-stores a message (MSG);
(d) wherein data words (DW) are transmitted via the plurality of system buses (5-1, 5-2) on the multiprocessor gateway (1) and the associated interface units (2a, 2b) of said system buses from and to the buffer stores (2f, 2g) of the interface units (2a, 2b) simultaneously without any waiting time;
(e) wherein each system bus (5-1, 5-2) has an associated system bus master (4-1, 4-2).

2. Communication chip according to Claim 1,
wherein the serial bus (3) is a field bus.

3. Communication chip according to Claim 2,
wherein the field bus is a CAN (Controller Area Network) bus.

4. Communication chip according to Claim 2,
wherein the field bus is a FlexRay bus.

5. Communication chip according to Claim 2,
wherein the field bus is a MOST bus.

6. Communication chip according to Claim 2,
wherein the field bus is a LIN bus.

7. Communication chip according to Claim 1,
wherein the serial bus (3) is an Ethernet bus.

8. Communication chip according to Claim 1,
wherein the message forwarding unit (2d) signals the reception of a message (MSG) transmitted via a system bus (5-1, 5-2) in words to the system bus master (4-1, 4-2) of the system bus.

9. Communication chip according to Claim 8,
wherein the message forwarding unit uses signals to confirm to the system bus master (4-1, 4-2) that a message (MSG) which is to be transmitted has been received after said system bus master has requested the information.

10. Communication chip according to Claim 1,
wherein a message received from the system bus (5-1, 5-2), which message is buffer-stored in a buffer store (2f, 2g) and is forwarded from the message forwarding unit (2d) to the message memory (2e), has at least one flag bit in order to signal a clear-to-send state via the serial bus (3).

11. Method for the bidirectional transmission of data between a serial bus, which transmits data in packets, and a plurality of system buses on a multiprocessor gateway, wherein each system bus (5-1, 5-2) has an associated system bus master (4-1, 4-2), wherein the system buses transmit the data in words, having the following steps:
(a) data packets (DP) which are transmitted via the serial bus (3) are converted into messages which have a plurality of data words (DW);
(b) the messages are buffer-stored in buffer stores (2f, 2g); and
(c) data words (DW) are transmitted via the plurality of system buses (5-1, 5-2) from and to the buffer stores (2f, 2g) simultaneously without any waiting time.

## Revendications

1. Module de communication destiné à raccorder un bus série (3) qui transfère des données par paquets à plusieurs bus système (5) d'un portail (1) à plusieurs processeurs qui transmettent les données par mots,
le module de communication (2) présentant :
(a) une unité (2c) de protocole de communication raccordée au bus série (3) et qui assure la conversion entre les paquets de données (DP) et des messages (MSG) qui sont tous constitués de plusieurs mots de données (DW),
(b) une unité (2d) de transfert de messages qui transfère des messages (MSG) entre au moins une mémoire (2e) à messages et l'unité (2c) de protocole de communication, ainsi que des mémoires tampon (2f, 2g),
(c) plusieurs unités d'interface (2a, 2b) qui sont raccordées chacune à un bus système (5-1, 5-2) associé du portail (1) à plusieurs processeurs, chaque unité d'interface (2a, 2b) étant reliée à au moins une mémoire tampon (2f, 2g) associée qui conserve temporairement un message (MSG),
(d) un transfert de mots de données (DW) par les différents bus système (5-1, 5-2) du portail (1) à processeur et leurs unités d'interface (2a, 2b) associées depuis et en direction des mémoires tampon (2f, 2g) des unités d'interface (2a, 2b) ayant lieu simultanément et sans temps d'attente,
(e) chaque système de bus (5-1, 5-2) présentant un maître associé (4-1, 4-2) de bus système.

2. Module de communication selon la revendication 1, dans lequel le bus série (3) est un bus de terrain.

3. Module de communication selon la revendication 2, dans lequel le bus de terrain est un bus CAN ("Contoller Area Network").

4. Module de communication selon la revendication 2, dans lequel le bus de terrain est un bus dit FlexRay.

5. Module de communication selon la revendication 2, dans lequel le bus de terrain est un bus MOST.

6. Module de communication selon la revendication 2, dans lequel le bus de terrain est un bus LIN.

7. Module de communication selon la revendication 1, dans lequel le bus série (3) est un bus Ethernet.

8. Module de communication selon la revendication 1, dans lequel l'unité (2d) de transfert de messages signale au maître (4-1, 4-2) du bus système la réception d'un message (MSG) reçu par mots par l'intermédiaire d'un bus système (5-1, 5-2).

9. Module de communication selon la revendication 8, dans lequel l'unité de transfert de message confirme au maître (4-1, 4-2) du bus système la réception d'un message (MSG) à transmettre par des signaux, après que ce dernier a demandé l'information.

10. Module de communication selon la revendication 1, dans lequel un message reçu par le bus système (5-1, 5-2), qui a été conservé temporairement dans une mémoire tampon (2f, 2g) et a été transmis par l'unité (2d) de transfert de message à la mémoire (2e) à message présente pour la signalisation qu'il est prêt à émettre sur le bus série (3) au moins un bit d'indicateur.

11. Procédé de transmission bidirectionnelle de données entre un bus série qui transfère des données par paquet et plusieurs bus système d'un portail à plusieurs processeurs, chaque bus système (5-1, 5-2) présentant un maître (4-1, 4-2) de bus système associé, les bus système transmettant les données par mot, et présentant les étapes suivantes :
(a) conversion de paquets de données (DP) transmises par le bus série (3) en messages qui présentent plusieurs mots de données (DW),
(b) conservation temporaire des messages dans des mémoires tampon (2f, 2g) et
(c) transmission de mots de donnée (DW) par les différents bus système (5-1, 5-2) depuis et vers les mémoires tampon (2f, 2g) simultanément et sans temps d'attente.
